# EUROPÄISCHE PATENTSCHRIFT

(11) **EP 2 266 732 B1**
(45) Veröffentlichungstag und Bekanntmachung des Hinweises auf die Patenterteilung: **09.09.2015**
(21) Anmeldenummer: 10166596.6
(22) Anmeldetag: 21.06.2010
(51) Int. Cl.: B23B 31/00, B23B 31/107, B23B 31/11, B23B 31/20

(54) **Spannsystem**
Clamping system
Système de serrage

(30) Priorität: 26.06.2009 CH 9972009
(43) Veröffentlichungstag der Anmeldung: 29.12.2010
(73) Patentinhaber: Rego-Fix AG, 4456 Tenniken (CH)
(72) Erfinder: Gerber, Ernst, 4418, Reigoldswil (CH)
(74) Vertreter: Braun, André jr.

(56) Entgegenhaltungen:
- WO-A2-2005/000505
- DE-A1- 19 717 005
- US-A- 2 125 005
- US-A- 3 518 738

## Beschreibung

Die Erfindung betrifft ein Spannsystem zum Einspannen eines zylindrischen, mit einer Mitnahmefläche versehenen Schafts gemäss dem Oberbegriff des Anspruchs 1 . Ein solches Spannsystem ist aus der WO 2005/000505 A2 bekannt.

In DIN 1835-2 sind Spannfutter mit seitlichen Spannschrauben beschrieben. Diese Normfutter zeichnen sich durch gute Spannform der Formschlüssigkeit (Spannschraube - Mitnahmefläche am Schneidwerkzeugschaft)aus. Andererseits entsprechen sie den heute geforderten Eigenschaften wie Rundlaufgenauigkeit, Wuchtgüte und Spannkräfte nicht mehr.

Deshalb wird die in der Norm 1835-2 beschriebene Ausführungsform heute schon dahingehend verbessert, dass die Aufnahmebohrung um die zu erwartende Toleranz inklusive der Durchbiegung zum Rundlaufzentrum versetzt eingebracht wird. Damit sollte unter Verspannung des Schneidwerkzeuges die Exzentrizität aufgehoben werden.

High Performance Cutting (HPC) oder Hochleistungszerspanung ist ein Zerspanen mit deutlich erhöhtem Zeitspanvolumen durch höhere Schnittgeschwindigkeiten und Vorschubgeschwindigkeiten gegenüber den konventionellen Zerspanungsverfahren. Der Unterschied zum High Speed Cutting ist fließend, doch allgemein gilt, dass HPC langsamere Schnittgeschwindigkeiten, aber deutlich größere Schnitttiefen und damit schlechtere Oberflächengüten erreicht. HPC umfasst nicht nur den Zerspanprozess, sondern bindet alle an der Produktion beteiligten Faktoren ein mit dem Ziel, die Produktivität und Prozesssicherheit zu steigern. Dadurch wird eine enorme Forderung an die Haltekraft eines Spannwerkzeuges gestellt.

Die Rundlaufgenauigkeit sowie die Wuchtgüte der Werkzeugspannvorrichtung müssen, um diesem Trend entsprechen zu können, optimiert werden. Beispiele solcher Optimierung sind in WO 2005/000505 und DE 19717005 beschrieben.

Der Erfindung liegt die Aufgabe zugrunde, die hohe Haltekraft mit Formschluss von Werkzeugschäften gemäss DIN 1835-2 zu nutzen und gleichzeitig Nachteile, wie Exzentrizität durch einseitig radiales Spannen und Unwucht, zu vermeiden.

Erfindungsgemäss wird dies erreicht durch ein Spannsystem mit den Merkmalen des Anspruchs 1.

Bei einer bevorzugten Ausführungsform der Erfindung besitzen die Nut und entsprechend die Rippen des Spannkeils unterschiedliche Flankenwinkel, wobei der Winkel der zur Werkzeugseite gerichteten Flanke flacher ist als der Winkel der zur Maschinenseite gerichteten Flanke.

Gemäss einer weiteren bevorzugten Ausführungsform der Erfindung besteht der Spannkeil aus federndem Material. Gemäss einer weiteren Ausführungsform der Erfindung sind die Rippen über die seitliche Begrenzung des Spannkeils hinaus derart verlängert, dass sie sich über mehr als die Hälfte des Schaftumfangs erstrecken.

Im Folgenden werden anhand der beiliegenden Zeichnungen bevorzugte Ausführungsbeispiele der Erfindung beschrieben. Es zeigen
- Fig. 1: eine Schnittdarstellung einer Weldonaufnahme mit einem eingelegten Spannkeil
- Fig. 2: eine Form eines Spannkeils
- Fig. 3: eine weitere Form eines Spannkeils
- Fig. 4: eine weitere Form eines Spannkeils
- Fig. 5: eine Schnittdarstellung eines ER-Spannsystems mit eingelegtem Spannkeil
- Fig. 6: eine Schnittdarstellung einer alternativen Form eines ER-Spannsystems
- Fig. 7: eine Schnittdarstellung eines sog. PG-Spannsystems
- Fig. 8: eine Schnittdarstellung einer Maschinenspindel mit durchgehender Bohrung
- Fig. 9: eine Schnittdarstellung einer Maschinenspindel ohne Durchgangsbohrung
- Fig. 10: eine Schnittdarstellung eines Zylinder-Doppelhalters

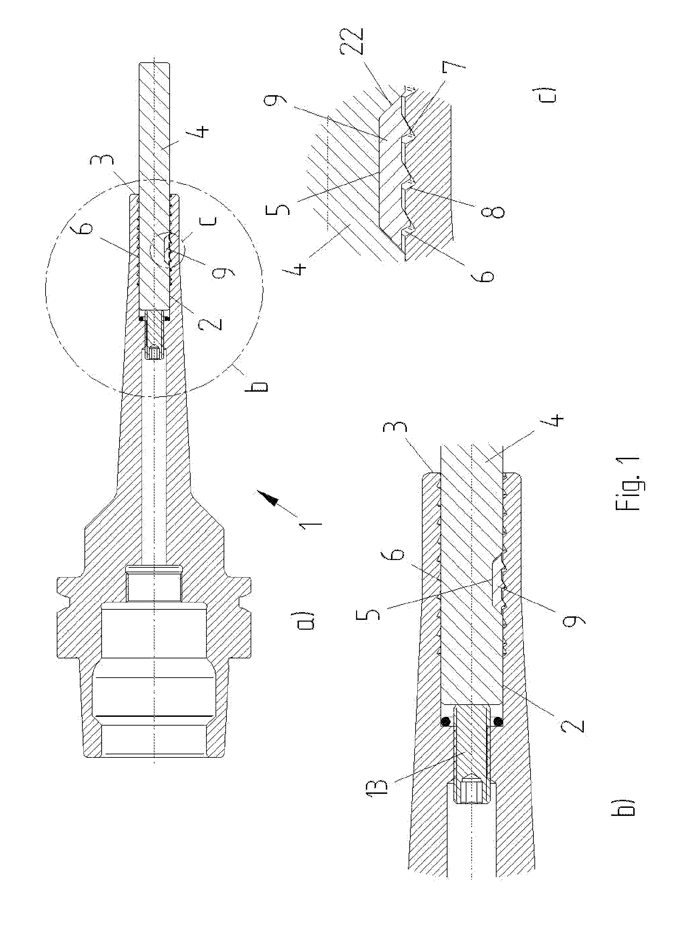

Die in Fig. 1a gesamthaft, in Fig. 1b einfach und in Fig. 1c zweifach vergrössert, in einer Axialebene geschnitten gezeigte Weldonaufnahme 1 besitzt eine koaxiale zylindrische Aufnahmebohrung 2, die sich von ihrer werkzeugseitigen Stirnfläche 3 in Richtung der Maschinenseite erstreckt. In der Aufnahmebohrung sitzt ein Weldonschaft 4, der mit einer durch eine Ausnehmung gebildete ebene, rechteckige Mitnahmefläche 5 versehen ist.

Die Wandfläche der Aufnahmebohrung 2 ist mit einer gewindeförmig gewendelten Nut 6 versehen, die sich vom werkzeugseitigen Ende der Aufnahmebohrung über einen grösseren Teil der axialen Länge derselben erstreckt. Im Unterschied zu einem üblichen Gewinde besitzt die Nut unterschiedliche Flankenwinkel. Der Winkel der zur Werkzeugseite gerichteten Flanke 7 ist flach ausgebildet. Diese Flanke dient im Verspannungsvorgang als Umlenkung der axialen auf die radiale Kraft. Der Winkel der zur Maschinenseite gerichteten Flanke 8 ist steil ausgebildet.

In der Ausnehmung des Weldonschafts ist ein Spannkeil 9 angeordnet, der im Wesentlichen den Dimensionen der Ausnehmung entspricht und insbesondere eine an der Mitnahmefläche anliegende ebene, rechteckige Anpressfläche besitzt. Der Spannkeil kann entweder nur eingelegt, oder aber mit dem Schaft lösbar oder unlösbar verbunden sein.

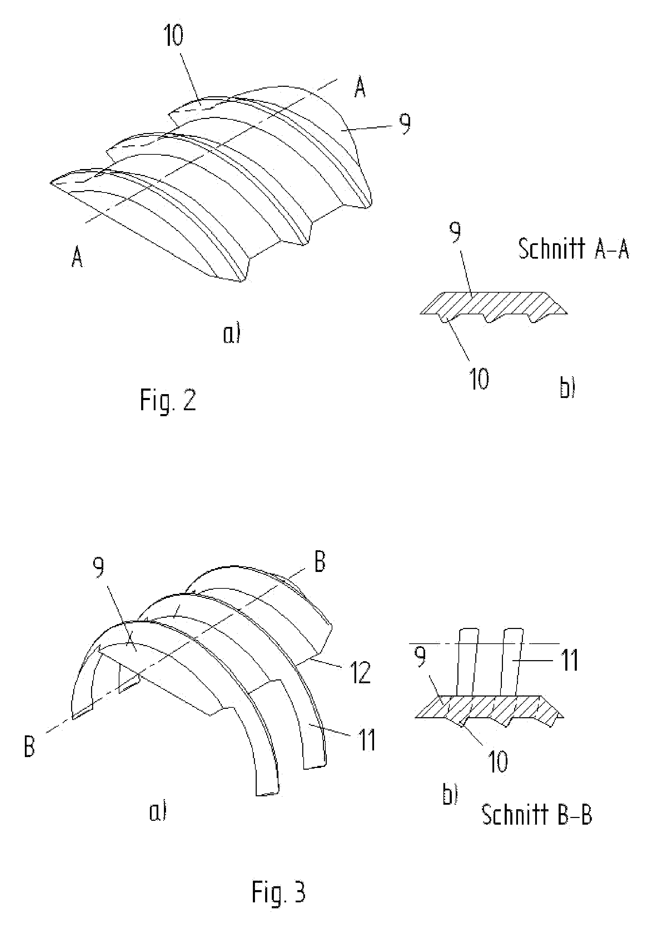

Die Aussenseite des Spannkeils ist, wie in Fig. 2 gezeigt, mit gewendelten Rippen 10 in der Art eines partiellen Aussengewindes versehen, die in die Form der gewendelten Nut der Aufnahmebohrung passen. Fig. 2a ist eine perspektivische Darstellung des Spannkeils, Fig. 2b eine Schnittdarstellung in der Ebene A-A. Die unterschiedlich steilen Flanken der Rippen sind deutlich ersichtlich. Der Spannkeil besteht aus einem druckfesten Material, wie z.B. Hartmetall, Keramik, Stahl etc.

Bei der in Fig. 3 gezeigten Ausführungsform des Spannkeils besitzen die Rippen 10 Verlängerungen 11, die über die beiden seitlichen Begrenzungen 12 des Spannkeils 9 hinausragen und zwar vorzugsweise so, dass sie sich in ihrer Längsrichtung über einen Winkel von mehr als 180° erstrecken. Wenn dieser Spannkeil in die Ausnehmung des Schafts eingesetzt ist, umfassen die überstehenden Rippen den Schaft. Durch die Erstreckung der Rippen über mehr als den halben Umfang des Schafts klickt der Spannkeil beim Einsetzen ein. Für diese Ausführungsform besteht der Spannkeil aus einem druckfesten federnden Material, wie z.B. Federstahl.

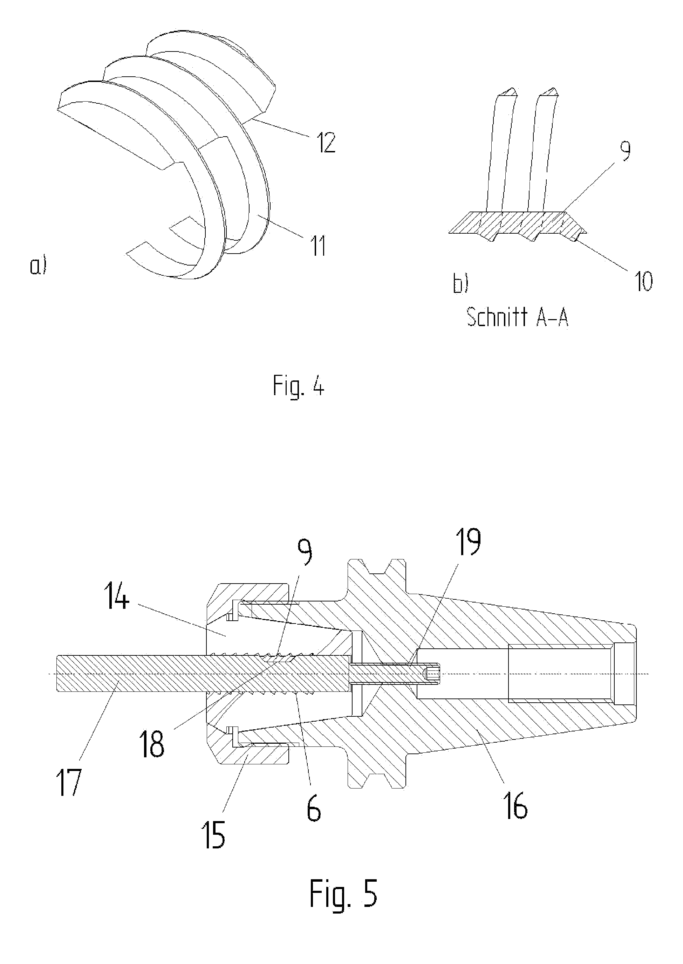

Bei der in Fig. 4 gezeigten Ausführungsform des Spannkeils erstrecken sich die Verlängerungen 11 der Rippen 10 nur einseitig über die seitliche Begrenzung 12 des Spannkeils hinaus. Auch diese Form des Spannkeils ermöglicht das Einklicken am Schaft, sofern sich die Rippen über mehr als den halben Umfang erstrecken.

Wenn sich der Spannkeil in der Ausnehmung des Schaftes befindet, kann der Schaft in die Aufnahmebohrung eingeschraubt werden. Die Verbindung Schaft-Spannkeil wird mindestens soweit in die Aufnahmebohrung eingeschraubt, bis der Spannkeil in seiner ganzen axialen Ausdehnung in der Aufnahmebohrung sitzt und kann darüber hinaus beliebig weit eingedreht werden bis der Schaft am maschinenseitigen Ende der Aufnahmebohrung oder einer anderen Begrenzung ansteht.

Damit die Verbindung Schaft-Spannkeil in die Aufnahmebohrung eingedreht werden kann, sind die Toleranzen des Spannkeils und der dazugehörenden Kämme so gewählt, dass der Kamm des Spannkeils in der Nut Spiel hat. Dieses Spiel wird aufgehoben, sobald axial Kraft auf den Schaft aufgebracht wird.

Um den Schaft zu spannen wird von der Maschinenseite z.B. mittels eines Schraubbolzens 13 eine axiale Kraft auf den Schaft aufgebracht. Die Ausnehmung des Schafts ist axial begrenzt und besitzt z.B. gemäss Norm eine 45° steile Flanke 22. Deshalb kann der Spannkeil axial nicht ausweichen und es entsteht über die schiefen Ebenen der Rippen- und Nutenflanken ein radialer Druck auf den Spannkeil und somit auf den Schaft. Die Steigung der gewendelten Nut und der gewendelten Rippen ist kleiner als der Selbsthemmungswinkel, sodass beim axialen Druckaufbau zur Verspannung des Systems der Schaft keine Drehbewegung ausführen kann, die zu dessen Herausdrehen führen würde.

Die Anpressfläche des Spannkeils am Schaft ist wesentlich grösser als die kreisförmige Anpressfläche einer radialen Schraube, wie sie gemäss Stand der Technik verwendet wird oder gemäss Norm vorgesehen ist.

Die spiral- oder gewindeförmige Nut und die entsprechenden Rippen des Spannkeils sind für Standardschneidwerkzeuge, wie Bohrer, Fingerfräser, Fräser etc., mit Schneiden für eine Spanabhebung bei Rechtsdrehung, entsprechend rechtssteigend ausgeführt. Dadurch zieht sich das Werkzeug während der Bearbeitung selbsttätig fest. Die Steigung ist so ausgeführt, dass sich der Werkzeugschaft während der Bearbeitung nicht lösen kann, jedoch nach der Bearbeitung trotz der dabei auftretenden Belastung (Vibration, Walken) leicht gelöst werden kann.

Wie in den Fig. 5 - 9 gezeigt, ist das erfindungsgemässe Spannsystem nicht auf einen Weldonschaft beschränkt, sondern es kann zusammen mit anderen Spannfuttern oder -hülsen eingesetzt werden. Das in Fig. 5 gezeigte System ist eine an sich bekannte ER-Spannzange 14, die mittels einer Spannmutter 15 in einer Spannzangenaufnahme 16 gehalten ist. Die Aufnahmebohrung der Spannzange ist mit der gewendelten Nut 6 versehen. Der Werkzeugschaft 17 ist mit einer Ausnehmung 18 versehen, in welcher sich ein Spannkeil 9 mit entsprechenden Rippen befindet. In der Aufnahme ist ein Schraubbolzen 19 zum Beaufschlagen des Schafts mit der für das Spannen erforderlichen axialen Kraft angeordnet.

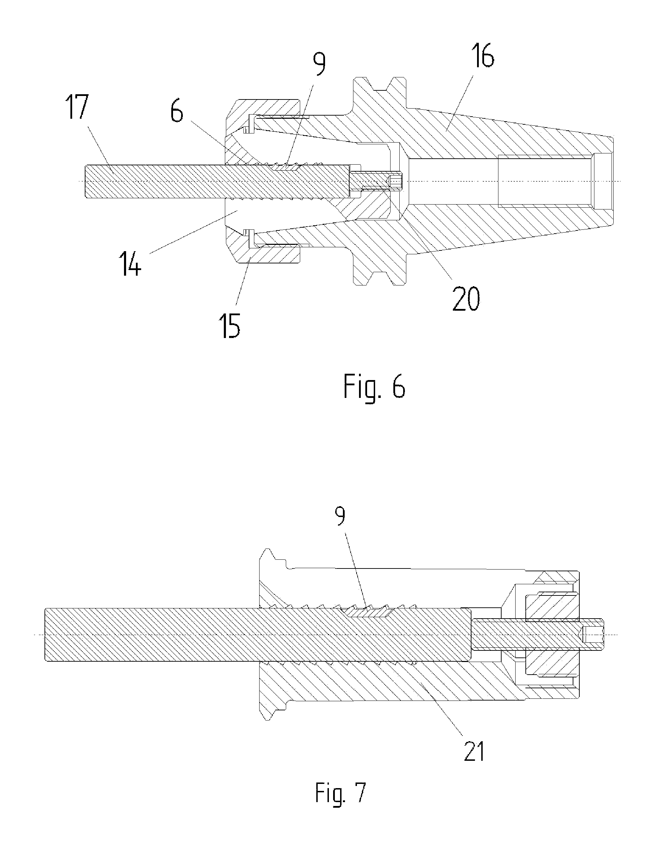

Das in Fig. 6 gezeigte System ist ebenfalls eine ER-Spannzange, wobei allerdings die Spannzange selbst mit dem Schraubbolzen 20 zum Spannen versehen ist.

Das in Fig. 7 gezeigte System ist ein sog. PG-Spannfutter 21 mit einer Aufnahmebohrung deren Konuswinkel kleiner ist als der Selbsthemmungswinkel.

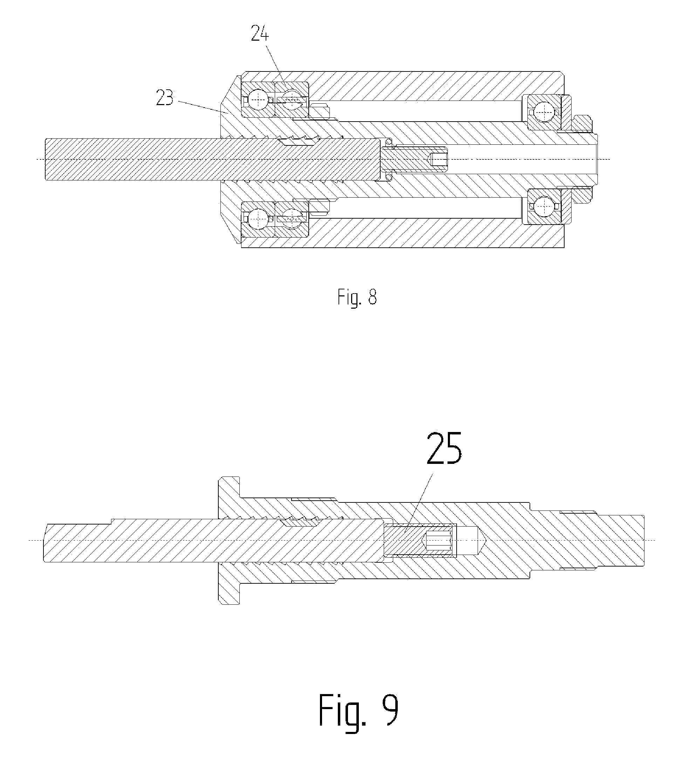

Wie das in Fig. 8 dargestellte System zeigt, ist das erfindungsgemässe Spannsystem auch mit Spindeln von Fräsmaschinen und Bohrmaschinen, sowie in Spindeln von angetriebenen Werkzeugen einsetzbar, bei denen die Aufnahmewelle 23 mit durchgehender Bohrung in Wälzlagern 24 gehalten ist.

Fig. 9 zeigt ebenfalls eine Aufnahmewelle 23, jedoch ohne durchgehende Bohrung für Spindeln. Eine Spannschraube 25 dient als Anschlagschraube, mit der die Längeneinstellung vor dem Einsetzen des Werkzeugs vorgenommen wird. Anschliessend wird der Werkzeugschaft eingedreht und die axiale Kraft dadurch aufgebracht, dass der Schaft mittels eines Spannschlüssels gegen die Anschlagschraube festgezogen wird. Zum Ansetzen des Spannschlüssels kann der Werkzeugschaft mit geeigneten Ausnehmungen ausserhalb der einzudrehenden Schaftlänge versehen sein.

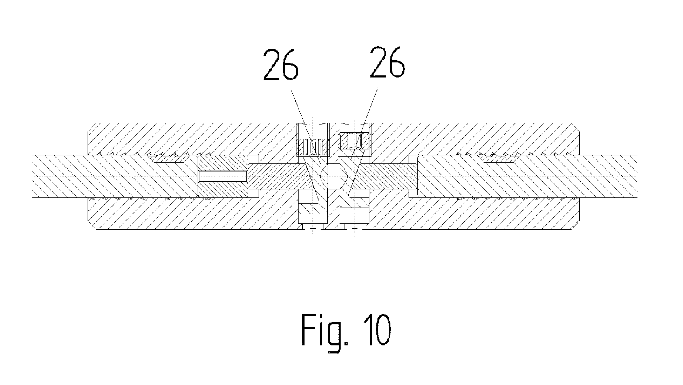

Auch in dem in Fig. 10 gezeigten Zylinder-Doppelhalter ist das erfindungemässe Spannsystem einsetzbar. Dieser Werkzeughalter besitzt eine seitliche Anschlagverstellung/Spannvorrichtung 26.

Es ist ohne weiteres ersichtlich, dass neben den vorstehend beschriebenen Spannsystemen auch noch andere Spannsysteme für den Einsatz der erfindungsgemässen Lösung mit einem eingesetzten Spannkeil geeignet sind, insbesondere auch Schrumpffutter für das thermische Einschrumpfen des Werkzeugschafts, Polygonspannfutter, Hydrodehnfutter und andere mehr.

Gegenüber den bekannten Spannsystemen hat das hier beschriebene System eine Reihe von wesentlichen Vorteilen: Durch die axiale Feststellschraube ist die Längeneinstellung des Werkzeugschafts optimal möglich. Der Spannfuttermantel wird nicht durch Querbohrungen für seitliche Feststellschrauben geschwächt. Die erfindungsgemässe Lösung ermöglicht kleinste Störkontur und besonders schlanke Bauweise des Werkzeughalters. Ausserdem ist infolge der durch keine Querbohrung unterbrochene Innenfläche eine präzisere Bearbeitung der Aufnahmebohrung möglich. Schliesslich weist das erfindungsgemässe Spannsystem keine Unwucht auf, da die Ausnehmung am Werkzeugschaft vollständig durch den Spannkeil ausgefüllt wird.

## Patentansprüche

1. Spannsystem zum Einspannen eines zylindrischen, mit einer durch eine Ausnehmung (18) gebildeten Mitnahmefläche (5) versehenen Schafts (4; 17) , beispielsweise eines Werkzeugschafts, in eine axiale Aufnahmebohrung (2) einer Aufnahme (1; 16; 23) , wobei das Spannsystem den Schaft und die Aufnahme umfasst, **dadurch gekennzeichnet, dass** die Wand der Aufnahmebohrung mit einer gewindeähnlich spiralförmig umlaufenden Nut (6) versehen ist und das Spannsystem einen in die Ausnehmung am Schaft eingesetzten, mit der Nut (6) entsprechenden spiraligen Rippen (10) versehenen Spannkeil (9) enthält.

2. Spannsystem nach Anspruch 1, **dadurch gekennzeichnet, dass** die Nut (6) und entsprechend die Rippen (10) des Spannkeils (9) unterschiedliche Flankenwinkel besitzen.

3. Spannsystem nach Anspruch 2, **dadurch gekennzeichnet, dass** der Winkel der zur Werkzeugseite gerichteten Flanke (7) flacher ist als der Winkel der zur Maschinenseite gerichteten Flanke (8).

4. Spannsystem nach Anspruch 1, **dadurch gekennzeichnet, dass** der Spannkeil (9) aus federndem Material besteht.

5. Spannsystem nach Anspruch 4, **dadurch gekennzeichnet, dass** die Rippen (10) über die seitliche Begrenzung (12) des Spannkeils (9) hinaus derart verlängert sind, dass sie sich über mehr als die Hälfte des Schaftumfangs erstrecken.

## Claims

1. Clamping system for gripping a cylindrical shank (4; 17), for example a tool shank, provided with a driving face (5) formed by a recess (18) in an axial receiving bore (2) of a holder (1; 16; 23), wherein the clamping system comprises the shank and the holder, **characterized in that** the wall of the receiving bore is provided with a groove (6) which runs round spirally like a thread and the clamping system contains a clamping wedge (9) which is inserted into the recess on the shank and is provided with spiral ribs (10) corresponding to the groove (6).

2. Clamping system according to claim 1, **characterized in that** the groove (6) and correspondingly the ribs (10) of the clamping wedge (9) have different flank angles.

3. Clamping system according to claim 2, **characterized in that** the angle of the flank (7) directed towards the tool side is shallower than the angle of the flank (8) directed towards the machine side.

4. Clamping system according to claim 1, **characterized in that** the clamping wedge (9) is made of resilient material.

5. Clamping system according to claim 4, **characterized in that** the ribs (10) are extended beyond the lateral boundary (12) of the clamping wedge (9) in such a way that they extend over more than half of the shank circumference.

## Revendications

1. Système de serrage pour le serrage d'une tige (4 ; 17) cylindrique pourvue d'une surface d'entraînement (5) formée par un évidement (18), par exemple d'une tige d'outil, dans le perçage d'admission axial (2) d'une admission (1 ; 16 ; 23), le système de serrage entourant la tige et l'admission, **caractérisé en ce que** la paroi du perçage d'admission est pourvue d'une rainure périphérique (6) en forme de spirale, semblable à un filet, et **en ce que** le système de serrage contient une clavette de serrage (9) placée dans l'évidement de la tige et pourvue de nervures (10) en spirale correspondant à la rainure (6).

2. Système de serrage selon la revendication 1, **caractérisé en ce que** la rainure (6) et de façon correspondante les nervures (10) de la clavette de serrage (9) présentent des angles de flancs différents.

3. Système de serrage selon la revendication 2, **caractérisé en ce que** l'angle du flanc (7) orienté vers le côté outil est plus plat que l'angle du flanc (8) orienté vers le côté machine.

4. Système de serrage selon la revendication 1, **caractérisé en ce que** la clavette de serrage (9) est constituée d'un matériau élastique.

5. Système de serrage selon la revendication 4, **caractérisé en ce que** les nervures (10) se prolongent au-delà de la délimitation latérale (12) de la clavette de serrage (9), de manière à s'étendre sur plus de la moitié du pourtour de tige.
